# EUROPEAN PATENT SPECIFICATION

(11) **EP 1 107 537 B1**
(45) Date of publication and mention of the grant of the patent: **13.05.2009**
(21) Application number: 00309183.2
(22) Date of filing: 18.10.2000
(51) Int. Cl.: H04L 29/06

(54) **System for distributing requests to servers**
Vorrichtung zur Verteilung von Anbieterbehandlungsanfragen
Appareil pour la distribution des requêtes de service entre des serveurs

(30) Priority: 18.10.1999 JP 29503699
(43) Date of publication of application: 13.06.2001
(73) Proprietor: NEC CORPORATION, Tokyo 108-8001, (JP)
(72) Inventor: Nitta, Yoshio, Minato-ku, Tokyo (JP)
(74) Representative: MacDougall, Alan John Shaw

(56) References cited:
- EP-A- 0 817 020
- EP-A- 0 817 444
- EP-A- 0 865 180
- WO-A-99/32956
- US-A- 5 951 694

## Description

### Background of the Invention

### 1. Field of the Invention

The present invention relates to a multi-server system composed of a plurality of servers. More particularly, the present invention relates to a multi-server system in which a setting change is unnecessary when a service cannot be provided by a currently-used server.

### 2. Description of the Related Art

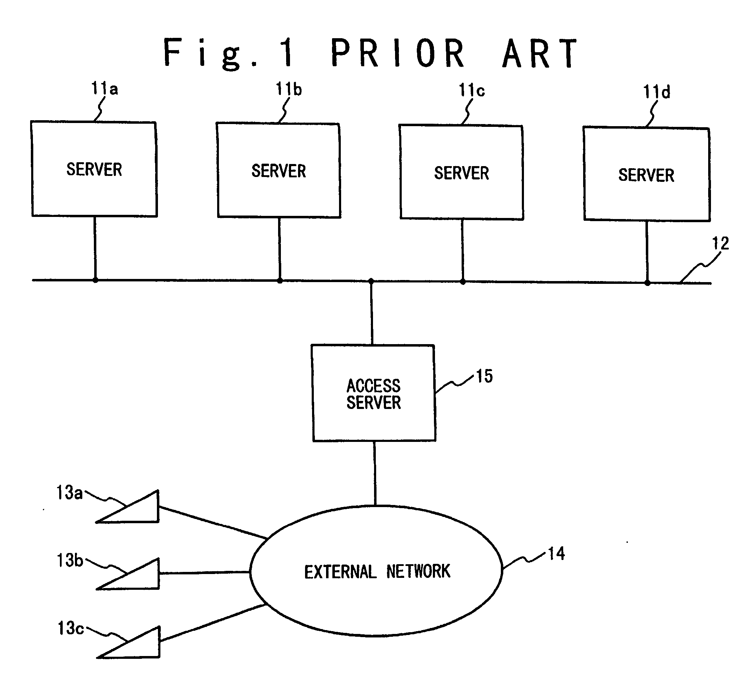

A multi-server system in which a plurality of servers are connected with a network is conventionally known. Fig. 1 is a block diagram showing the structure of a conventional multi-server system. Servers 11a, 11b, 11c and lid and an access server 15 are connected with each other by a local area network (hereinafter, LAN) 12. Also, terminals 13a, 13b and 13c are accommodated in an external network 14 such as a public network and connected by a private line.

The access server 15 connects the LAN 12 and the external network 14, and carries out a signal transfer between the terminals 13a to 13c and the servers 11a to 11d. Also, an address of a currently-used server is registered as a destination address indicative of a signal transfer destination in the access server 15 for the routing process to find the destination of a received signal. It is supposed that the server 11a is registered as the currently-used server to provide the service A, B and C in the initial state.

When a processing request for the service A is sent out from the terminal 13a, the processing request is sent to the access server 15 through the external network 14. When receiving the processing request, the access server 15 carries out a routing process to determine the destination of the processing request. Also, the access server 15 carries out protocol conversion to convert the received processing request to have a protocol of the LAN 12. Then, the access server 15 sends out the converted processing request to the destination (the server 11a in this example) determined in the routing process based on the converted processing request. The server 11a receives the converted processing request from the access server 15 through the LAN 12 to execute processing in accordance with the received processing request.

In the conventional multi-server system of the above mentioned structure, when the currently_used server 11a has failed or when the server 11a has been ° replaced for performance improvement, the server 11a is temporarily separated from the LAN 12 and repaired or replaced by a new one. In this case, because it is not possible to provide the service by the currently-used server 11a, it is necessary to use a substitution server in place of the currently-used server. To use the substitution server, the address of the currently-used server which has been registered on the access server 15 needs to be changed into the address of the substitution server.

However, in the conventional multi-server system, it is necessary to manually change the setting of the access server 15. There is a problem that a complex job of setting the change becomes necessary.

U.S. Patent 5,951,694 (Microsoft) discloses an on-line-services network that includes application servers and gateway microcomputers interconnected on a LAN. The microcomputers access a service map to locate replicated application servers currently running service applications. Those application servers may be re-allocated to different on-line services, and further servers may be added.

### Summary of the Invention

Therefore, an object of the preferred embodiments of the present invention is to provide a multi-server system in which change setting is unnecessary when any service cannot be provided by a currently-used server.

In order to achieve an aspect of the present invention, a multi-server system includes a terminal, a plurality of servers and an access unit. The terminal sends out a first processing request. The plurality of servers can provide services. The access unit refers to a first route table based on the first processing request to select one of the plurality of servers as a first server, and sends out a second processing request corresponding to the first processing request to the first server, which provides the service for the second processing request to the terminal. The access unit refers to a second route table to select another of the plurality of servers as a second server when the service cannot be provided by the first server, the second route table indicating a Media Access Control (MAC) address for the second ser-ver. The access unit sends out the second processing request to the second server using the indicated second-server MAC address, the second server providing the service for the second processing request.

Preferably, the first server sends out a switching instruction to the access unit when the service cannot be provided by the first server, and the access unit normally uses the first route table, and uses the second route table in response to the switching instruction. More preferably, the first server has the second route table, and sends out the switching instruction and the second route table to the access unit when the service cannot be provided by the first server, and the access unit sets the second route table in place of the first route table in response to the switching instruction. Or more preferably, the access unit has the first and second route tables, and normally uses the first route table, and uses the second route table in response to said switching instruction.

Preferably, the access unit has the first and second route tables, and determines that the service cannot be provided by the first server when a response cannot be received from the first server until a predetermined time has passed after the second processing request is sent to the first server. More preferably, the access unit has the first and second route tables, and normally uses the first route table, and uses the second route table when the response cannot be received from the first server. Or more preferably, the access unit has the first route table, and sends the second processing request to each of the plurality of servers other than the first server when the response cannot be received from the first server, and rewrites the first route table based on the response from any of the plurality of servers other than the first server to form the second route table.

Preferably, the access unit temporarily stores the first processing request in a memory in place of referring to the second route table and sending the second processing request.

Preferably, the access unit converts, in protocol, said first processing request to said second processing request.

In a further aspect of the subject invention, there is provided a method of providing a service in a multi-server system, including steps of: (a) referring to a first route table based on a first processing request from a terminal to select one of the plurality of servers as a first server; (b) sending out a second processing request corresponding to the first processing request to the first server; (c) providing the service for the second processing request from the first server; (d) referring to a second route table to select another of the plurality of servers as a second server, when a service cannot be provided by the first server, the second route table indicating a Media Access Control (MAC) address for the second server; (e) sending out the second processing request to the second server using the indicated second-server MAC address; and, (f) providing the service for the second processing request from the second server.

Preferably, the method further includes steps of: (g) generating a switching instruction from the first server when the service cannot be provided by said first server, and (h) determining in response to the switching instruction that the service cannot be provided by the first server. More preferably, the step (g) includes: generating, from the first server, a switching instruction and the second route table when the service cannot be provided by the first server, and, the method further includes the step of receiving the second route table from the first server. Or more preferably, the step (d) includes: switching from the first route table to the second route table in response to the switching instruction.

Preferably, the method further includes determining that the service cannot be provided by the first server, when a response cannot be received from the first server until a predetermined time has passed after the second processing request is sent to the first server.

Preferably, the method further includes the step of temporarily storing the first processing request in a memory in place of the sending of the second processing request to the second server.

Preferably, the method further includes the step of converting, in protocol, the first processing request to the second processing request.

### Brief Description of the Drawings

Preferred features of the present invention will now be described, by way of example only, with reference to the accompanying drawings, in which:-
Fig. 1 is a block diagram of the structure of a conventional multi-server system;
Fig. 2 is a block diagram of the structure of a multi-server system according to the first embodiment of the present invention;
Figs. 3A and 3B are diagrams of route tables;
Fig. 4 is a block diagram of the structure of a multi-server system according to the second embodiment of the present invention; and
Fig. 5 is block diagram of the structure of the multi-server system according to the sixth embodiment of the present invention.

### Description of the Preferred Embodiments

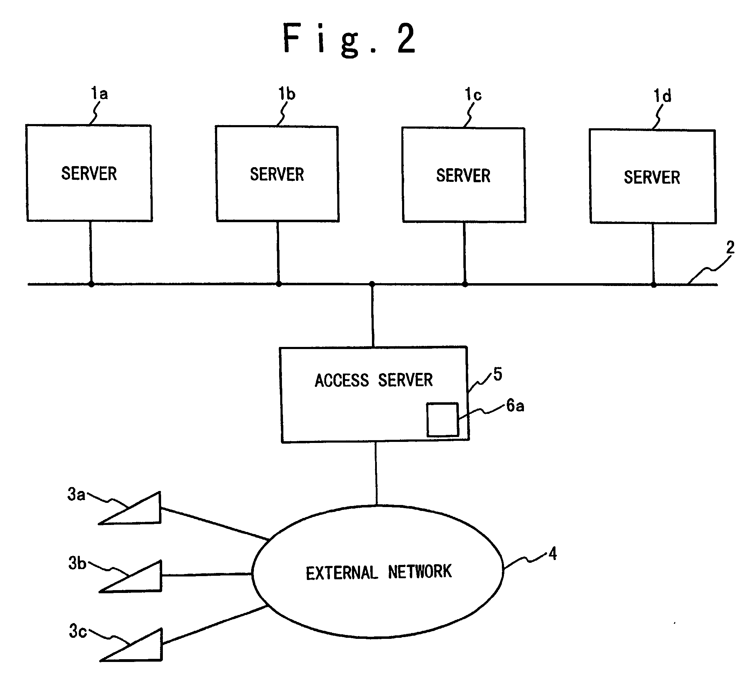

Next, a multi-server system of the present invention will be described below in detail with reference to the attached drawings. Fig. 2 is a block diagram showing the structure of the multi-server system according to the first embodiment of the present invention. The multi-server system of Fig. 2 is composed of a plurality of servers 1a, 1b, 1c and 1d, a local area network (hereinafter, LAN) 2, terminals 3a, 3b and 3c, an external network 4 and an access server 5. The plurality of servers 1a, 1b, 1c and 1d provide services such as the storage and input/output of files, management service, print output, and communication controls in accordance with the received processing request. The LAN 2 may be an Ethernet. The terminals 3a, 3b and 3c send out processing requests, respectively. The external network 4 may be a public network and a private line. The access server 5 is connected with the LAN 2 and the external network 4 to carry out signal transfer between the terminal 3a to 3 c and the servers 1a to 1d. The server la to 1d and the access server 5 are connected with each other by the LAN 2. Also, the terminals 3a to 3c are accommodated in the external network 4.

Next, the operation of the multi-server system will be described. In the first embodiment, the following matters are supposed. That is, with the server 1a it is possible to provide services A, B and C at least. Also, with the server 1b it is possible to provide service A at least. With the server 1c it is possible to provide service B at least. With the server 1d it is possible to provide service C at least.

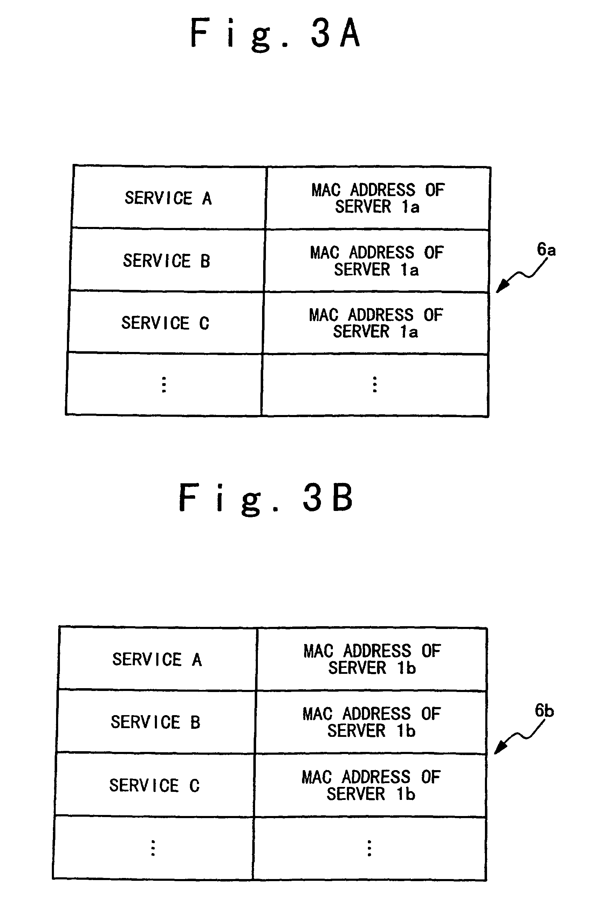

The access server 5 has a route table 6a shown in Fig. 3A, in which an address of the currently-used server is registered as the destination address indicative of the signal destination for every service. The access server 5 refers to the route table 6a based on the processing request to carry out a routing process for determining the destination of the received processing request.

The destination address registered on the route table 6a is a MAC (Media Access Control) address of the currently-used server. Also, in the initial state, the server la is the currently-used server which provides the services A, B and C. Therefore, the MAC addresses of the server la are registered in the route table 6a as the destination addresses corresponding to the services A, B and C at the initial state, as shown in Fig. 3A.

In such an initial state, when the processing request for the service A is sent out from the terminal 3a, the processing request is sent to the access server 5 through the external network 4. When the access server 5 receives the processing request from the external network 4, the access server 5 carries out the routing process to determine the destination of the processing request. Also, the access server 5 carries out the protocol-converting process to convert the received processing request so as to have a protocol adaptive to the LAN 2.

The routing process is carried out as follows. That is, the access server 5 determines which of the services is related with the received processing request. Then, the access server 5 acquires the destination address corresponding to the related service from the route table 6a. In the multi-server system of Fig. 2, the services which can be provided are previously determined, and peculiar identifying data is allocated for each of the services. It is possible to determine that the received processing request is related with which of the services by checking the identifying data which is added to the processing request.

In this way, the access server 5 transfers the processing request after protocol conversion to the destination address (the server la in this example) which is acquired from the route table 6a. Through the LAN 2, the processing request is received from the access server 5 by the server 1a, and the server la carries out the processing in accordance with the processing request.

The above description is given to a case where the processing request of the service A is sent out from the terminal 3a. However, when a processing request is sent out from the terminal 3b or 3c or when the processing request of the service B or C is sent out, the similar processing is carried out.

Next, the operation when the service cannot be provided by the currently used server la will be described. In a case that the server la has failed or in a case that the server la has been replaced for performance improvement, the server la needs to be temporarily separated from the LAN 2. In such a case, the server 1a sends out a switching instruction signal to the access server 5. Also, the server la sends out a table-content signal indicative of the contents of the route table 6b, as shown in Fig. 3B.

In the route table 6b is stored the addresses of the substitution server which is used in place of the currently-used server, as the destination addresses indicative of the signal destinations for the respective services. The route table 6b is previously prepared in the currently-used server. As shown in Fig. 3B, in the route table 6b are registered the MAC addresses of the servers 1b, 1c, and 1d as the destination addresses corresponding to the services A, B and C.

The access server 5 rewrites the content of the route table 6a into the content of the received route table 6b, when the switching instruction signal is received from the server la through the LAN 2.

The operation after this is the same as that of the initial state. That is, the access server 5 carries out the routing process to acquire the destination address from the route table 6b when receiving a processing request from the external network 4. Also, the access server 5 carries out the protocol conversion. Through the rewriting of the route table 6b, the processing request of the service A is transferred to the server 1b in place of the server 1a. Also, the processing request of the service B is transferred to the server 1c and the processing request of the service C is transferred to the server 1d.

As mentioned above, in the multi-server system of the first embodiment, the contents of the route table 6a of the access server 5 are automatically changed when the currently-used server 1a cannot provide any service. Therefore, the change setting to the access server 5 can be made unnecessary.

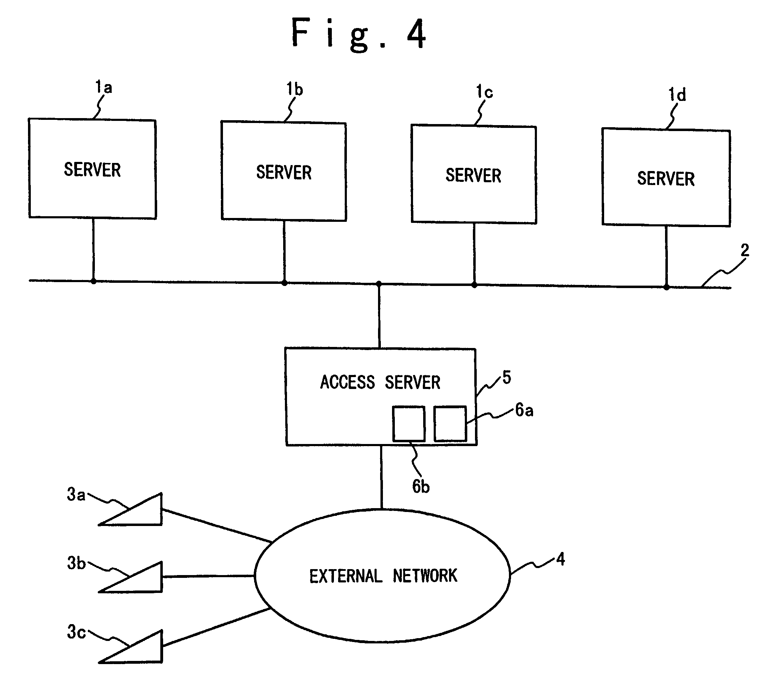

In the first embodiment, the contents of the route table 6b are transmitted from the currently-used server la. In the second embodiment of the present invention, both of the route tables 6a and 6b are previously provided in the access server 5, as shown in Fig. 4. In this case, the access server 5 of the second embodiment usually refers to the route table 6a based on the processing request to carry out the routing process. However, when receiving the switching instruction signal from the server 1a, the access server 5 switches the search object table from the route table 6a to the route table 6b, and refers to the route table 6b to carry out the routing processes. With this, the same effect as that in the first embodiment can be attained.

In the first and second embodiments, when any service cannot be provided by the currently-used server 1a, the switching instruction signal is transmitted from the server la. In the multi-server system according to the third embodiment of the present invention, the access server 5 detects any trouble or non-existence of the currently-used server 1a. That is, the access server 5 of the third embodiment has both of the route tables 6a and 6b as in the second embodiment. In the usual state, the route table 6a is referred to for carrying out the routing process. The access server 5 determines whether or not a service can be provided by the server la. When it is determined that the service cannot be provided because of the failure or non-existence of the server 1a, the access server 5 switches from the route table 6a to the route table 6b. For this purpose, the access server 5 checks whether there is no response from the server la until a predetermined time has elapsed after a processing request after the protocol conversion is set to the currently-used server la. When there is no response from the server 1a, the access server 5 determines that the service cannot be provided by the currently-used server 1a, switches the search-object table to the route table 6b, and refers to the route table 6b to carry out a routing processes. In this way, the same effect as that of first embodiment can be attained.

In the second and third embodiments, the route tables 6a and 6b are provided in the access server 5. In the multi-server system according to the fourth embodiment of the present invention, the access server 5 has the route table 6a. The access server 5 searches a substitution server. That is, the access server 5 of this embodiment refers to the route table 6a to carry out a routing process in the usual state. However, the access server 5 starts the search of the substitution server, when the switching instruction signal is received from the server 1a, or when there is no response from the server la until the predetermined time has passed after the processing request after the protocol conversion is sent out to the currently-used server 1a.

The search of the substitution server is attained through sending out the processing request after the protocol conversion, in order, to the servers 1b, 1c and 1d, other than the currently-used server la. One server which can provide the service corresponding to the processing request returns a response to the access server 5 after the reception of the processing request. In this case, however, the server which cannot provide the corresponding service does not reply. Thus, when there is no response from the servers until the predetermined time has elapsed after a processing request is sent out, the access server 5 determines that the server to which the processing request is sent is not a substitution server and sends out the processing request to the next server.

By repeating such a searching operation and finding the substitution server, the access server 5 rewrites the destination address of the route table 6a corresponding to the processing request into the MAC addresses of the substitution server. Thus, the same effect as that of the first embodiment can be attained.

In the first to fourth embodiments, when the service cannot be provided by the currently-used server 1a, the processing request is transferred to the substitution server. In the multi-server system according to the fifth embodiment of the present invention, the processing requests are stored temporarily until the server 1a has recovered.

That is, when the switching instruction signal is received from the currently-used server 1a, or when there is no response from the server 1a until the predetermined time has elapsed after a processing request is sent out to the currently-used server 1a, the access server 5 of this embodiment stores the processing requests received from the terminals 3a to 3c in an internal memory (not shown) or an external memory (not shown) connected with the LAN 2.

Thus, the processing requests can be stored until the server la is recovered. The stored processing requests are enough to be transferred to the server la after the recovery of the server la. It is not necessary to change the setting of the access server 5 manually.

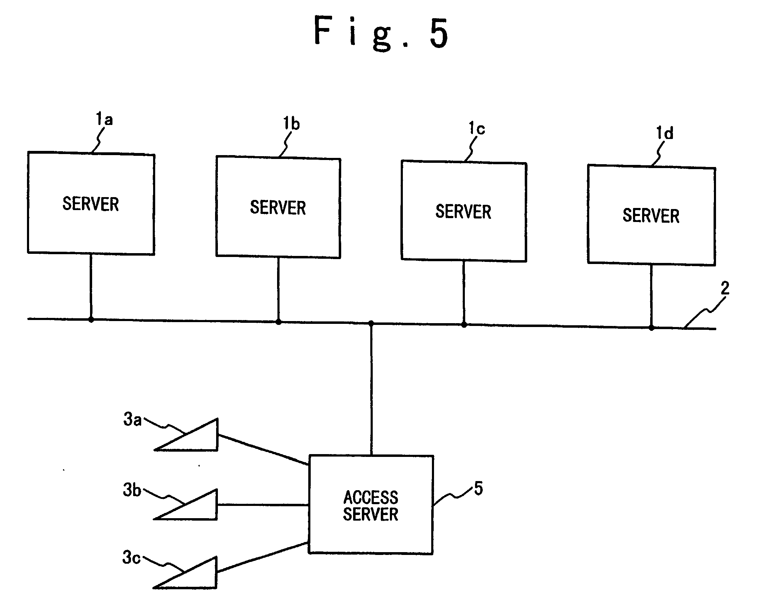

Fig. 5 is a block diagram showing the structure of the multi-server system according to the sixth embodiment of the present invention. In Fig. 5, the same reference numerals as those in Fig. 2 are allocated to the same components as those in Fig. 2.

In the first to fifth embodiments, a case where the terminals 3a to 3c are accommodated in the external network 4 is described. However, the terminals 3a to 3c may be accommodated in the LAN 2, as shown in Fig. 5. In this case, the protocol conversion in the access server 5 is not necessary.

It should be noted that in the present invention, the signal destination is determined for every service or an application program. Therefore, the substitution server needs not to be the same structure as the currently-used server. The substitution server is sufficient to be possible to provide at least a kind of service in accordance with the processing request from the terminal.

According to the present invention, when the currently used server cannot provide any service, the access server automatically registers the addresses of the substitution server on the route table as the destination addresses instead of the addresses of the currently-used server. Therefore, the change setting to the transfer means can be made unnecessary.

Also, when the currently-used server cannot provide any service, the access server automatically switches the search object table from the first route table to the second route table. Therefore, the change setting to the transfer means can be made unnecessary.

Also, when the currently used server cannot provide any service, the access server stores the processing requests from the terminals temporarily in the memory. Therefore, the processing requests can be saved until the currently-used server has recovered. The stored processing requests are transferred to the currently-used server after the currently-used server has recovered. Therefore, the change setting to the access server can be made unnecessary.

While the present invention has been described in its preferred embodiments, it is to be understood that the words which have been used are words of description rather than limitation, and that changes may be made to the invention without departing from its scope as defined by the appended claims.

Each feature disclosed in this specification (which term includes the claims) and/or shown in the drawings may be incorporated in the invention independently of other disclosed and/or illustrated features.

The text of the abstract filed herewith is repeated here as part of the specification.

A multi-server system includes a terminal, a plurality of servers and an access unit. The terminal sends out a first processing request. The plurality of servers can provide services. The access unit refers to a first route table based on the first processing request to select one of the plurality of servers as a first server, and sends out a second processing request corresponding to the first processing request to the first server, which provides the service for the second processing request to the terminal. The access unit refers to a second route table to select another of the plurality of servers as a second server, and sends out the second processing request to the second server, the second server providing the service for the second processing request to the terminal.

## Claims

1. A multi-server system, comprising:
a plurality of servers (1a, 1b, 1c, 1d) which can provide services; and,
an access unit adapted to (5) receive a first processing request from a terminal (3a) and which is further adapted to refer to a first route table (6a) based on a content of said first processing request to select one of said plurality of servers as a first server, and is adapted to send out a second processing request corresponding to said first processing request to said first server (1a) which is adapted to provide said service for said second processing request, **characterized in that** wherein said access unit (5) is further adapted to refer to a second route table (6b) to select another (1b) of said plurality of servers as a second server when the service cannot be provided by said first server and is adapted to send out said second processing request to said second server, said second server being adapted to provide said service for said second processing request.

2. The multi-server system according to claim 1, wherein:
said first server (1a) is adapted to send out a switching instruction to said access unit (5) when said service cannot be provided by said first server; and,
said access unit (5) normally uses said first route table (6a), and uses said second route table (6b) in response to said switching instruction.

3. The multi-server system according to claim 2, wherein:
said first server (1a) has said second route table (6b), and is adapted to send out said switching instruction and said second route table to said access unit (5) when said service cannot be provided by said first server (6a); and,
said access unit (5) is adapted to set said second route table (6b) in place of said first route table (6a) in response to said switching instruction.

4. The multi-server system according to claim 2, wherein said access unit (5) has said first and second route tables (6a, 6b), and normally uses said first route table (6a), and uses said second route table (6b) in response to said switching instruction.

5. The multi-server system according to claim 1, wherein said access unit (5) has said first and second route tables (6a, 6b), and is adapted to determine that said service cannot be provided by said first server (1a) when a response cannot be received from said first server until a predetermined time has passed after said second processing request is sent to said first server.

6. The multi-server system according to claim 5, wherein said access unit (5) has said first and second route tables (6a, 6b), and normally uses said first route table (6a), and uses said second route table (6b) when the response cannot be received from said first server (1a).

7. The multi-server system according to claim 5, wherein said access unit (5) has said first route table (6a), and is adapted to send said second processing request to each of said plurality of servers other than said first server (1a) when the response cannot be received from said first server, and is further adapted to rewrite said first route table based on the response from any of said plurality of servers other than said first server to form said second route table (6b).

8. The multi-server system according to claim 1, wherein said access unit (5) is adapted to temporarily store said first processing request in a memory in place of referring to said second route table (6b) and sending said second processing request.

9. The multi-server system according to any one of claims 1 to 8, wherein said access unit (5) is adapted to convert, in protocol said first processing request to said second processing request.

10. A method of providing a service in a multi-server system, comprising steps of:
(a) referring to a first route table (6a) based on a first processing request from a terminal to select one (1a) of said plurality of servers as a first server;
(b) sending out a second processing request corresponding to said first processing request to said first server (1a);
(c) providing said service for said second processing request from said first server **characterized in that** it;
(d) refers to a second route table (6b) to select another (1b) of said plurality of servers as a second server, when a service cannot be provided by said first server;
(e) sends out said second processing request to said second server; and,
(f) provides said service for said second processing request from said second server.

11. The method according to claim 10, further comprising steps of:
(g) generating a switching instruction from said first server when said service cannot be provided by said first server (1a); and,
(h) determining in response to said switching instruction that said service cannot be provided by said first server.

12. The method according to claim 11, wherein said step (g) includes:
generating, from said first server, a switching instruction and said second route table (6b) when said service cannot be provided by said first server (1a);
and wherein said method further comprises the step of:
receiving said second route table from said first server.

13. The method according to claim 11, wherein said step (d) includes:
switching from said first route table (6a) to said second route table (6b) in response to said switching instruction.

14. The method according to claim 10, further comprising a step of:
determining that said service cannot be provided by said first server (1a) when a response cannot be received from said first server until a predetermined time has passed after said second processing request is sent to said first server.

15. The method according to claim 10, further comprising a step of:
temporarily storing said first processing request in a memory in place of the sending of said second processing request to said second server (1b).

16. The method according to claim 10, further comprising a step of:
converting, in protocol, said first processing request to said second processing request.

## Patentansprüche

1. Mehrserversystem, das aufweist:
eine Mehrzahl von Servern (1a, 1b, 1c, 1d), die Dienste liefern können; und
eine Zugangseinheit (5), die dazu ausgebildet ist, eine erst Bearbeitungsanforderung von einem Endgerät (3a) zu empfangen und die weiter dazu ausgebildet ist, eine erste Leitwegtabelle (6a) beruhend auf den Inhalt der ersten Bearbeitungsanforderung zu konsultieren, um einen der Mehrzahl von Servern als ersten Server auszuwählen, und dazu ausgebildet ist, eine zweite Bearbeitungsanforderung entsprechend der ersten Bearbeitungsanforderung zu dem ersten Server (1a) zu senden, der dazu ausgebildet ist, den Dienst für die zweite Bearbeitungsanforderung zu liefern, **dadurch gekennzeichnet, dass** dabei die Zugangseinheit (5) weiter dazu ausgebildet ist, eine zweite Leitwegtabelle (6b) zu konsultieren, um einen anderen (1b) der Mehrzahl von Servern als einen zweiten Server auszuwählen, wenn der Dienst durch den ersten Server nicht geliefert werden kann, und dazu ausgebildet ist, die zweite Bearbeitungsanforderung zu dem zweiten Server herauszusenden, wobei der zweite Server dazu ausgebildet ist, den Dienst für die zweite Bearbeitungsanforderung zu liefern.

2. Mehrserversystem nach Anspruch 1, bei dem:
der erste Server (1a) dazu ausgebildet ist, eine Schaltanweisung an die Zugangseinheit (5) herauszusenden, wenn der Dienst nicht durch den ersten Server geliefert werden kann; und
die Zugangseinheit (5) normalerweise die erste Leitwegtabelle (6a) benutzt und die zweite Leitwegtabelle (6b) als Reaktion auf die Schaltanweisung verwendet.

3. Mehrserversystem nach Anspruch 2, bei dem:
der erste Server (1a) die zweite Leitwegtabelle (6b) hat und dazu ausgebildet ist, die Schaltanweisung und die zweite Leitwegtabelle zu der Zugangseinheit (5) herauszusenden, wenn der Dienst nicht durch den ersten Server (6a) geliefert werden kann; und
die Zugangseinheit (5) dazu ausgebildet ist, die zweite Leitwegtabelle (6b) anstelle der ersten Leitwegtabelle (6a) als Reaktion auf die Schaltanweisung herauszusenden.

4. Mehrserversystem nach Anspruch 2, bei dem die Zugangseinheit (5) die ersten und zweiten Leitwegtabellen (6a, 6b) hat und normalerweise die erste Leitwegtabelle (6a) verwendet und die zweite Leitwegtabelle (6b) als Reaktion auf die Schaltanweisung verwendet.

5. Mehrserversystem nach Anspruch 1, bei der die Zugangseinheit (5) die ersten und zweiten Leitwegtabellen (6a, 6b) hat und dazu ausgebildet ist, zu bestimmen, dass der Dienst nicht durch den ersten Server (1a) geliefert werden kann, wenn eine Antwort nicht von dem ersten Server empfangen werden kann, bis eine vorbestimmte Zeit abgelaufen ist, nachdem die zweite Bearbeitungsanforderung zu dem ersten Server gesendet worden ist.

6. Mehrserversystem nach Anspruch 5, bei dem die Zugangseinheit (5) die ersten und zweiten Leitwegtabellen (6a, 6b) hat und normalerweise die erste Leitwegtabelle (6a) verwendet und die zweite Leitwegtabelle (6b) verwendet, wenn die Antwort nicht von dem ersten Server (1a) erhalten werden kann.

7. Mehrserversystem nach Anspruch 5, bei dem die Zugangseinheit (5) die erste Leitwegtabelle (6a) hat und dazu ausgebildet ist, die zweite Bearbeitungsanforderung zu jedem der Mehrzahl von Servern zu senden, die vom ersten Server (1a) verschieden sind, wenn die Antwort nicht von dem ersten Server erhalten werden kann, und weiter dazu ausgebildet ist, die erste Leitwegtabelle beruhend auf der Antwort von irgendeiner der Mehrzahl von Servern, die vom ersten Server verschieden sind, erneut zu schreiben, um die zweite Leitwegtabelle (6b) zu bilden.

8. Mehrserversystem nach Anspruch 1, bei dem die Zugangseinheit (5) dazu ausgebildet ist, die erste Bearbeitungsanforderung in einem Speicher zu speichern, anstatt die zweite Leitwegtabelle (6b) zu konsultieren und die zweite Bearbeitungsanforderung zu senden.

9. Mehrserversystem nach einem der Ansprüche 1 bis 8, bei der die Zugangseinheit (5) dazu ausgebildet ist, die erste Bearbeitungsanforderung in die zweite Bearbeitungsanforderung im Protokoll umzuwandeln.

10. Verfahren zum Liefern eines Dienstes in einem Mehrserversystem, das die Schritte aufweist:
(a) eine erste Leitwegtabelle (6a) beruhend auf einer ersten Bearbeitungsanforderung von einem Endgerät zu konsultieren, um einen (1a) der Mehrzahl von Servern als ersten Server auszuwählen;
(b) eine zweite Bearbeitungsanforderung, die der ersten Bearbeitungsanforderung entspricht, zu dem ersten Server (1a) zu senden;
(c) den Dienst für die zweite Bearbeitungsanforderung von dem ersten Server zu liefern; **dadurch gekennzeichnet,**
(d) **dass** es eine zweite Leitwegtabelle (6b) konsultiert, um einen anderen (1b) der Mehrzahl von Servern als zweiten Server auszuwählen, wenn ein Dienst durch den ersten Server nicht geliefert werden kann;
(e) sendet die zweite Bearbeitungsanforderung an den zweiten Server heraus; und
(f) liefert den Dienst für die zweite Bearbeitungsanforderung von dem zweiten Server.

11. Verfahren nach Anspruch 10, das weiter die Schritte aufweist:
(g) eine Schaltanweisung von dem ersten Server zu erzeugen, wenn der Dienst nicht durch den ersten Server (1a) geliefert werden kann; und
(h) als Reaktion auf die Schaltanweisung zu bestimmen, dass der Dienst durch den ersten Server nicht geliefert werden kann.

12. Verfahren nach Anspruch 11, bei dem der Schritt (g) einschließt:
von dem ersten Server eine Schaltanweisung und die zweite Leitwegtabelle (6b) zu erzeugen, wenn der Dienst nicht durch den ersten Server (1a) geliefert werden kann;
und wobei das Verfahren weiter den Schritt aufweist:
die zweite Leitwegtabelle von dem ersten Server zu empfangen.

13. Verfahren nach Anspruch 11, bei dem der Schritt (d) einschließt:
von der ersten Leitwegtabelle (6a) zu der zweiten Leitwegtabelle (6b) als Reaktion auf die Schaltanweisung zu schalten.

14. Verfahren nach Anspruch 10, das weiter einen Schritt aufweist:
zu bestimmen, dass der Dienst nicht durch den ersten Server (1a) geliefert werden kann, wenn eine Antwort nicht von dem ersten Server erhalten werden kann, bis eine vorbestimmte Zeit abgelaufen ist, nachdem die zweite Bearbeitungsanforderung zum ersten Server gesendet worden ist.

15. Verfahren nach Anspruch 10, das weiter einen Schritt aufweist:
zeitweilig die erste Bearbeitungsanforderung in einem Speicher anstatt des Sendens der zweiten Bearbeitungsanforderung zu dem zweiten Server (1b) zu speichern.

16. Verfahren nach Anspruch 10, das weiter einen Schritt aufweist:
im Protokoll die erste Bearbeitungsanforderung in die zweite Bearbeitungsanforderung umzuwandeln.

## Revendications

1. Système multiserveur, comprenant :
une pluralité de serveurs (1a, 1b, 1c, 1d) qui peuvent fournir des services ; et
une unité d'accès (15) apte à recevoir une première requête de traitement d'un terminal (3a) et qui est en outre apte à faire référence à une première table d'acheminement (6a) sur la base d'un contenu de ladite première requête de traitement pour sélectionner l'un de ladite pluralité de serveurs en tant que premier serveur, et est apte à envoyer une deuxième requête de traitement correspondant à ladite première requête de traitement au dit premier serveur (1a) qui est apte à fournir ledit service pour ladite deuxième requête de traitement, **caractérisé en ce que** ladite unité d'accès (5) est en outre apte à faire référence à une deuxième table d'acheminement (6b) pour sélectionner un autre (1b) de ladite pluralité de serveurs en tant que deuxième serveur lorsque le service ne peut pas être fourni par ledit premier serveur, et est apte à envoyer ladite deuxième requête de traitement au dit deuxième serveur, ledit deuxième serveur étant apte à fournir ledit service pour ladite deuxième requête de traitement.

2. Système multiserveur selon la revendication 1, dans lequel :
ledit premier serveur (1a) est apte à envoyer une instruction de commutation à ladite unité d'accès (5) lorsque ledit service ne peut pas être fourni par ledit premier serveur ; et
ladite unité d'accès (5) utilise normalement ladite première table d'acheminement (6a), et utilise ladite deuxième table d'acheminement (6b) en réponse à ladite instruction de commutation.

3. Système multiserveur selon la revendication 2, dans lequel :
ledit premier serveur (1a) a ladite deuxième table d'acheminement (6b), et est apte à envoyer ladite instruction de commutation et ladite deuxième table d'acheminement à ladite unité d'accès (5) lorsque ledit service ne peut pas être fourni par ledit premier serveur (6a) ; et
ladite unité d'accès (5) est apte à régler ladite deuxième table d'acheminement (6b) à la place de ladite première table d'acheminement (6a) en réponse à ladite instruction de commutation.

4. Système multiserveur selon la revendication 2, dans lequel ladite unité d'accès (5) a lesdites première et deuxième tables d'acheminement (6a, 6b), et utilise normalement ladite première table d'acheminement (6a), et utilise ladite deuxième table d'acheminement (6b) en réponse à ladite instruction de commutation.

5. Système multiserveur selon la revendication 1, dans lequel ladite unité d'accès (5) a lesdites première et deuxième tables d'acheminement (6a, 6b), et est apte à déterminer que ledit service ne peut pas être fourni par ledit premier serveur (1a) lorsqu'une réponse ne peut pas être reçue dudit premier serveur jusqu'à ce qu'un temps prédéterminé se soit écoulé après l'envoi de ladite deuxième requête de traitement au dit premier serveur.

6. Système multiserveur selon la revendication 5, dans lequel ladite unité d'accès (5) a lesdites première et deuxième tables d'acheminement (6a, 6b), et utilise normalement ladite première table d'acheminement (6a), et utilise ladite deuxième table d'acheminement (6b) lorsque la réponse ne peut pas être reçue dudit premier serveur (1a).

7. Système multiserveur selon la revendication 5, dans lequel ladite unité d'accès (5) a ladite première table d'acheminement (6a) et est apte à envoyer ladite deuxième requête de traitement à chacun de ladite pluralité de serveurs autre que ledit premier serveur (1a) lorsque la réponse ne peut pas être reçue dudit premier serveur, et est en outre apte à réécrire ladite première table d'acheminement sur la base de la réponse de l'un quelconque de ladite pluralité de serveurs autre que ledit premier serveur pour former ladite deuxième table d'acheminement (6b).

8. Système multiserveur selon la revendication 1, dans lequel ladite unité d'accès (5) est apte à temporairement stocker ladite première requête de traitement dans une mémoire au lieu de faire référence à ladite deuxième table d'acheminement (6b) et d'envoyer ladite deuxième requête de traitement.

9. Système multiserveur selon l'une quelconque des revendications 1 à 8, dans lequel ladite unité d'accès (5) est apte à convertir, en protocole, ladite première requête de traitement en ladite deuxième requête de traitement.

10. Procédé destiné à fournir un service dans un système multiserveur, comprenant les étapes consistant à :
(a) faire référence à une première table d'acheminement (6a) sur la base d'une première requête de traitement d'un terminal pour sélectionner l'un (1a) de ladite pluralité de serveurs en tant que premier serveur ;
(b) envoyer une deuxième requête de traitement correspondant à ladite première requête de traitement au dit premier serveur (1a) ;
(c) fournir ledit service pour ladite deuxième requête de traitement dudit premier serveur ;
**caractérisé en ce qu'**il
(d) fait référence à une deuxième table d'acheminement (6b) pour sélectionner un autre (1b) de ladite pluralité de serveurs en tant que deuxième serveur lorsqu'un service ne peut pas être fourni par ledit premier serveur ;
(e) envoie ladite deuxième requête de traitement au dit deuxième serveur ; et
(f) fournit ledit service pour ladite deuxième requête de traitement dudit deuxième serveur.

11. Procédé selon la revendication 10, comprenant en outre les étapes consistant à :
(g) générer une instruction de commutation dudit premier serveur lorsque ledit service ne peut pas être fourni par ledit premier serveur (1a) ; et
(h) déterminer en réponse à ladite instruction de commutation que ledit service ne peut pas être fourni par ledit premier serveur.

12. Procédé selon la revendication 11, dans lequel ladite étape (g) comprend l'étape consistant à :
générer, à partir dudit premier serveur, une instruction de commutation et ladite deuxième table d'acheminement (6b) lorsque ledit service ne peut pas être fourni par ledit premier serveur (1a) ;
et dans lequel ledit procédé comprend en outre l'étape consistant à :
recevoir ladite deuxième table d'acheminement dudit premier serveur.

13. Procédé selon la revendication 11, dans lequel ladite étape (d) comprend l'étape consistant à :
commuter de ladite première table d'acheminement (6a) à ladite deuxième table d'acheminement (6b) en réponse à ladite instruction de commutation.

14. Procédé selon la revendication 10, comprenant en outre l'étape consistant à :
déterminer que ledit service ne peut pas être fourni par ledit premier serveur (1a) lorsqu'une réponse ne peut pas être reçue dudit premier serveur jusqu'à ce qu'un temps prédéterminé se soit écoulé après l'envoi de ladite deuxième requête de traitement au dit premier serveur.

15. Procédé selon la revendication 10, comprenant en outre l'étape consistant à :
stocker temporairement ladite première requête de traitement dans une mémoire au lieu d'envoyer ladite deuxième requête de traitement au dit deuxième serveur (1b) .

16. Procédé selon la revendication 10, comprenant en outre l'étape consistant à :
convertir, en protocole, ladite première requête de traitement en ladite deuxième requête de traitement.
